# EUROPEAN PATENT APPLICATION

(11) **EP 4 717 376 A1**
(43) Date of publication of application: **01.04.2026**
(21) Application number: 24203585.5
(22) Date of filing: 30.09.2024
(51) Int. Cl.: B22F 10/28, B22F 10/31, B22F 10/85, B22F 12/90, B33Y 10/00, B33Y 30/00, B33Y 50/02, B29C 64/393

(54) **SYSTEM AND METHOD FOR REAL-TIME / IN PROCESS QUALITY ASSURANCE AND PARAMETER ADJUSTMENT IN ADDITIVE MANUFACTURING OF COMPONENTS WITH INTRICATE FEATURES**

(71) Applicant: Siemens Energy Global GmbH & Co. KG, 81739 München (DE)
(72) Inventor: Eriksson, Jonas, 582 26 Linköping (SE); Graichen, Andreas, 60211 Norrköping (SE)

(57) **Abstract**

A method and system for additive manufacturing with in-process quality assurance. The method comprising: positioning one or more calibration elements within a CAD model in one or more free spaces not occupied by a workpiece to be produced by an additive manufacturing process using an additive manufacturing machine on the basis of the CAD model, wherein the one or more calibration elements comprise one or more features replicating features to be comprised in the workpiece once produced; starting the additive manufacturing process to produce workpiece and the one or more calibration elements on the basis of the CAD model including the workpiece and the calibration elements, and initiating a monitoring process of the additive manufacturing process using an imaging sensor or a thermal sensor, or a combination of both, to capture current sensor data comprising image and/or thermal data of the one or more calibration elements being produced; detecting one or more deviations by comparing the current sensor data with historical sensor data stored; adjusting one or more production parameters of the additive manufacturing machine performing the additive manufacturing process based on the detected one or more deviations.

## Description

### Technical field

The present invention relates to the field of additive manufacturing, in particular to systems and methods for real-time (or in process - meaning during the production of a specific workpiece) quality assurance and adaptive parameter control during the production of complex components with intricate and critical features such as fine cooling holes or cavities. The invention capitalizes on the distinctive advantages offered by additive manufacturing, including the utilization of free space around the workpiece being produced and the sequential, layer-by-layer construction process offering time between the start of the production of the first layer and the production time of a specific complex feature. By producing and observing calibration elements in the early stages of production, the solution proposed by the present invention enables the proactive observation and fine-tuning of key manufacturing parameters - such as printing speed, temperature, beam offset, hatch distance, travel speed, etc. - before these critical features are replicated in the final workpiece. This preemptive approach ensures that complex features, such as fine cooling holes and small cavities, are formed with high precision, significantly improving the quality, efficiency, and reliability of the additive manufacturing process while reducing the risk of defects in the final product.

### Background art

In traditional additive manufacturing, the quality assurance of complex features such as cooling holes and small cavities is typically performed after the entire workpiece has been produced. These features are critical in applications like gas turbines, where precise airflow through cooling channels is essential for the component's performance and longevity.

Historically, the process involved printing the entire workpiece, and only afterward conducting tests - such as flow tests for cooling channels, or CT scans for internal structures - to verify that the features were produced according to the required specifications. If defects were discovered, such as blockages in cooling channels or incomplete formations of small cavities, the entire workpiece might be deemed unusable. This approach leads to significant material waste, along with considerable time and cost expenditures, as the production process often needs to be restarted to correct these issues.

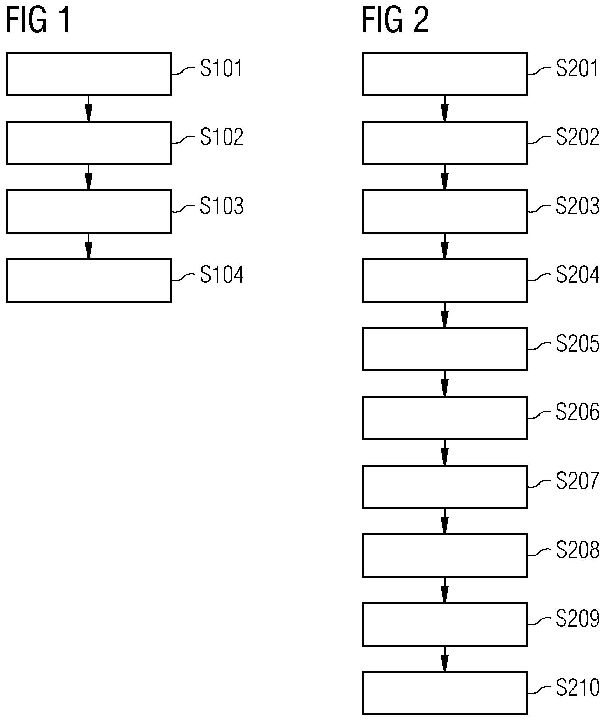

Fig. 1 is a schematic representation of such a conventional additive manufacturing setup where the quality of intricate features is evaluated only after the production is complete. The process starts with the initialization of the additive manufacturing machine, with setting up the equipment, loading the necessary material, and configuring basic production parameters such as layer thickness and temperature settings (Step 101). Once the setup is complete, the machine starts the layer-by-layer production of the workpiece, following a predefined sequence based on the digital model of the component being manufactured (Step 102). As the manufacturing process progresses, the workpiece is gradually built-up layer by layer, but no real-time quality assurance or parameter adjustment is performed during this phase. The production continues uninterrupted until the entire workpiece is completed, including all intricate features such as small cavities, cooling channels, or fine holes.

Once the production is finished, the workpiece is removed from the manufacturing platform, and post-production quality testing begins (Step 104). In this conventional approach, the quality of intricate features is assessed using various testing methods, such as flow tests, CT scans, or visual inspections, to ensure that the features have been produced correctly and meet the required specifications. If any defects are detected during these post-production tests, the entire workpiece may be deemed unacceptable, leading to significant material waste and increased production costs. In such cases, the manufacturing process must often be restarted, with adjustments made to the production parameters during the prototyping phase to try and correct the issues identified in the previous run. However, because these adjustments are made after the fact, there is no opportunity to correct defects during the actual production process.

Therefore, a major limitation of conventional art is the inability to identify and correct defects during the manufacturing process itself. Additive manufacturing, while advantageous for its ability to produce complex geometries, does not typically allow for real-time monitoring and adjustment of the production parameters. Defects in small features, such as cooling holes, are particularly problematic because they are more prone to occur due to the intricacy and precision required for their formation. These defects are often only discovered during post-production testing, at which point the opportunity for correction has passed.

Furthermore, traditional methods of adjusting manufacturing parameters - such as laser power, beam offset, hatch distance, and printing speed - are typically conducted during the prototyping phase. If the prototype reveals defects, adjustments are made, and the process is repeated until the desired results are achieved. However, once the production phase begins, these parameters are generally fixed, and any deviations that occur during the process are not corrected during the production of a workpiece.

Given these challenges, there is a clear need for an improved method that allows for real-time observation and adjustment of manufacturing parameters during the production process. Such a method would not only reduce the occurrence of defects in complex features but also enhance the overall efficiency and reliability of the additive manufacturing process.

The present invention addresses these needs by introducing a system and method that takes advantage of the free space around the workpiece and the layer-by-layer construction process inherent to additive manufacturing. By producing and observing calibration elements in the early stages of production, the present invention enables proactive observation and fine-tuning of key manufacturing parameters - such as printing speed, temperature, beam offset, hatch distance, and travel speed - before these critical features are replicated in the final workpiece. This approach ensures that complex features, such as fine cooling holes and small cavities, are formed with high precision, significantly improving the quality, efficiency, and reliability of the additive manufacturing process, thus limiting wastes of material and time/costs for producing non-conform workpieces.

### Summary of the invention

The present invention introduces a system and method aiming at enhancing the quality assurance and parameter control in additive manufacturing processes, particularly when producing complex components with intricate features such as fine cooling holes or small cavities. The invention leverages the unique characteristics of additive manufacturing, including the utilization of free space around the workpiece and the layer-by-layer construction process allowing time before producing a feature in the final workpiece, to enable real-time observation and adjustment of critical production parameters.

A key aspect of the invention is the ability to produce and observe calibration elements - such as calibration cubes - early in the production process, within the free spaces that are not occupied by the workpiece. These calibration elements are strategically designed to replicate the complex features that will later be produced in the final workpiece. By observing these elements through advanced techniques using sensor data such as normal imaging or/and optical thermography, the system can capture both geometric and thermal data for the feature in the observed on-going production.

This current sensor data is then compared with historical sensor data from previous production runs, allowing the system to identify potential deviations and defects on features before they are replicated in the actual workpiece. By enabling adjustments to key manufacturing parameters - such as printing speed, temperature, beam offset, hatch distance, and travel speed, etc. - during the production process, the proposed solution ensures that intricate features are formed with high precision according to the requirements. This proactive approach reduces the likelihood of defects on the finished workpiece, thus minimizing material waste, production time and costs.

Importantly, the present invention provides the ability to monitor deviations in an early phase of production allowing to adjust production parameters in real-time before the production of the feature on the workpiece, which is a significant improvement over conventional methods, where such adjustments are only made after the entire workpiece has been produced.

Advantageous embodiments of the invention include the use of both normal imaging and optical thermography to observe the calibration elements, as well as the comparison of different capture ranges (for instance video instead of image) with historical data corresponding to be more accurate in the detection of deviation and root causes allowing more accurate parameter adjustments. Additionally, the invention allows for the production of multiple calibration elements (for instance as "grapes" of elements) in sequence, each providing an opportunity for a further round of monitoring deviation and performing a further adjustment of the manufacturing process before the critical features are produced in the final workpiece.

These configurations and developments, as well as further advantageous embodiments, are detailed in the dependent claims and described with reference to the figures of the drawings.

Where appropriate, the above-mentioned configurations and developments can be combined implementations can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

### Drawings

The present invention is described in greater detail in the following on the basis of the embodiments shown in the schematic figures of the drawings, in which:
- Fig. 1: Is a flowchart of a method of additive manufacturing and testing according to conventional art.
- Fig. 2: Is a flowchart of a method according to the present invention.
- Fig. 3: Is a schematic illustration of the production of calibration elements in the form of cubes with features.
- Fig. 4: Is a diagram of a system according to the invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

### Detailed description

The present invention introduces an advanced system and method for real-time quality assurance and adaptive parameter control in additive manufacturing. These system and method are particularly designed for the production of complex components featuring intricate structures such as fine cooling holes and small cavities in fan. The invention leverages the unique capabilities of additive manufacturing - specifically the use of free space around the workpiece and the layer-by-layer construction process - to produce and observe calibration elements, such as test cubes, early in the production cycle. Indeed, when a workpiece is produced, an area where the powder is not solidified can be seen as a free space.

These calibration elements serve as proxies for the critical features that will later be formed in the final workpiece. By producing these elements in the early stages of manufacturing, the system enables real-time observation and fine-tuning of key manufacturing parameters, ensuring that the final workpiece is produced with high precision and minimal defects.

Fig. 2 is a flowchart of a method for additive manufacturing according to the present invention.

The method starts with a step 201 of initialization of the additive manufacturing process, which involves setting up the machine, loading the necessary materials (such as metal powder), and configuring the initial production parameters, including layer thickness, printing speed, travel speed, temperature, laser power, beam offset, and hatch distance, etc.

In a second step S202 one or more calibration elements are positioned. More particularly, one or more specifically designed calibration elements - such as a test cube - with one or more characteristic features to be produced and tested/observed are selected.

Indeed, the calibration elements (such as test cubes) are designed to replicate critical features of the final workpiece, such as such fine cooling holes, small cavities, or specific geometries that are prone to defects when produced using additive manufacturing. Therefore, each calibration element may include one or more specific design element that correspond to the critical features of the final workpiece. For example, a calibration element might include diagonal channels to test for potential flow characteristics or horizontal channels to monitor for sagging effects. The design of the calibration element is tailored to address the specific technical requirements of the features being tested. Then, the calibration elements to be placed are chosen, depending on the features present in the workpiece that the user wants to test / observe, for instance because they are the most likely to present challenges during the manufacturing process, such as issues with dimensional accuracy, material fusion, or cooling. These calibration elements can be selectable models existing in a library of the CAD software, that the user can selected, or that are proposed to the user considering the complex features comprised in the CAD model of his workpiece.

The one or more calibration elements are positioned on a CAD model such as to be in a free space corresponding to a space left free in the additive manufacturing machine performing the production of the CAD model, such that they will be produced by the additive manufacturing machine on a space that is left free by the workpiece being produced.

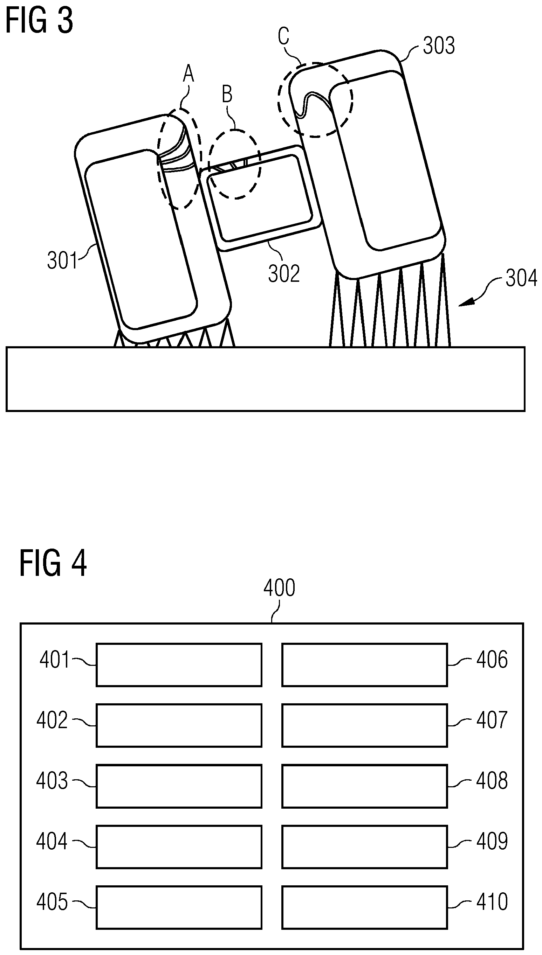

Fig. 3 is a schematic illustration of the production of calibration elements in the form of a plurality of test cubes comprising critical features whose production needs to be tested. In this figure, a first test cube 301 has been placed on the CAD model of the workpiece in a free space such that it is has been produced by additive manufacturing early in the process of producing the workpiece (not visible). The test cube 301 has been selected because it comprises the feature A corresponding to a specific type of cooling holes that is present in the workpiece and that has been identified as critical. Similarly, a second and a third cubes 302 and 304, comprising respectively the features B and C, have also been provided and produced. As a result, the complex features A, B and C can be produced and observed for detecting potential deviations early in the process, and this well before these features are produced in the workpiece.

Importantly, the one or more calibration elements are positioned such that the one or more features to be observed during their production is lower than the same feature in the workpiece to be produced, ensuring that it is produced before the corresponding critical features are formed on the actual workpiece.

In advantageous embodiments, a preset (vertical) distance between the feature (its last layer) in the calibration element and the feature (its first layer) in the workpiece to produce is defined. This preset distance can correspond a production duration that is longer than a preset time duration considered necessary to process the results of the monitoring of deviation, determining and performing adjustments of the manufacturing parameters.

In an embodiment, the one or more calibration elements can be integrated into a support structure geometry, which is the temporary framework built to support overhanging pieces produced during the additive manufacturing process.

It is to be noted that for a particular set of features to be tested and considering the available free space available, one or a plurality of calibration elements can be placed in the free space for covering the larger set of features to test.

In a preferred embodiment, one or more columns or "grapes" for the one or more calibration elements can be placed within the free space, forming vertical sequences that allows for iterative observation and adjustment of manufacturing parameters. These columns are designed to be produced layer by layer, with each subsequent calibration element building upon the insights gained from the previous one. As the system observes the results of each calibration element, it monitors any deviations from the desired specifications. Based on these observations, the system can perform real-time adjustments to production parameters like laser power, beam offset, or printing speed. This iterative process can continue as long as the production has not yet reached the first layer containing the beginning of the critical feature on the workpiece. By continuously refining the parameters throughout the production of these columns, the system ensures that by the time the critical feature is reached, the manufacturing conditions are optimized, significantly reducing the risk of defects and enhancing the overall quality of the final workpiece. Other arrangements of the plurality of identical calibration elements in the free space are possible, as long as the arrangement allows that they are sequentially produced in time one after the other, ideally spaced with a preset distance to allow performing the monitoring, detection of deviations and adjustments of parameters that are presented after.

In a third step 203, the additive manufacturing of the CAD model comprising the workpiece, and the one or more calibration elements begins, and simultaneously or subsequently, the monitoring process can be initiated to capture current sensor data. This monitoring is essential for capturing critical data throughout the production process allowing the detection of deviation.

The system can utilize various types of sensors depending on the specific requirements, which is to say depending on which type of sensor data are need. For instance, the monitoring can be conducted using imaging sensors that capture detailed visual data of each layer, providing real-time feedback on the geometric accuracy as the layers are added. Alternatively, thermal sensors, such as infrared cameras or optical thermography devices, can be employed to generate heat maps, offering insights into the thermal behavior of the material in the form of its thermal history, which is crucial for detecting issues like uneven cooling or thermal stresses. Advantageously, a combination of both imaging and thermal sensors can be used to provide a comprehensive view of the process, capturing both the physical/geometrical characteristics and the thermal history of the build.

Further, several monitoring strategies with variable sampling options are possible. Indeed, the monitoring can be performed layer by layer, where each layer is carefully observed before moving on to the next. That is to say that there is one sample (e.g. one photo and/or one heat map) per layer, for instance directly once the layer is finished. Alternatively, data can be sampled at preset time intervals, capturing the state of the build at specific times during the production of a same layer or after a set number of layers. Advantageously, the system can record video, providing an uninterrupted view of the entire production process. The captured current sensor data can be saved on the system or on a remote server. The saved current sensor data can be tagged to corresponding production sample and its production parameters.

In an embodiment, the system can determine from the internal information on which layer is being produced and the CAD model containing the model of the workpiece and the one or more calibration elements, when the critical feature are being produced and consequently, focus the capturing of the corresponding current sensor data to the corresponding timeframe only. When the capturing duration of the current sensor data exceeds this corresponding limited timeframe, the part of the current data corresponding to the critical features can be tagged such that it can be specifically retrieved for the step of detection of deviation when a comparison with historical sensor data is performed.

In a fourth optional step 204, the beam offset, and the laser power can already be modified according to the result of the calibration element while printing, and an adoption can be performed for each layer.

In a fifth optional step 205, critical features in the one or more calibration elements can be detected on the produced elements of for instance using face recognition, overlying the heat map with good master map obtained from stored master. This would ensure a better detection of the current sensor data to use for comparison.

In a sixth step 206, a detection of deviations is performed. This step involves a comparison between the so-called current sensor data captured during the additive manufacturing process and historical sensor data. Historical sensor data can be stored in a repository in the system or a remote server and fetched by the system. It consists of previously recorded datasets from earlier production runs, containing critical information on both successful and defective builds and corresponding production parameters. This data can include geometric measurements from imaging sensors, thermal profiles from infrared or optical thermography sensors, and other metrics relevant for observing the manufacturing process.

The comparison process can start by aligning the current sensor data with the corresponding historical data, using specific layers or time intervals as reference points. Depending on the manufacturing requirements, this comparison can be conducted using different types of sensor data. If only imaging data is used, the system compares the geometric accuracy of the current layers against the historical geometric data, looking for deviations in dimensions, alignment, or surface finish that might indicate a problem. If only thermal data is employed, the system compares the current heat maps and thermal profiles with those from the historical records, examining cooling rates, thermal gradients, and temperature distributions to identify any anomalies that could suggest issues such as improper material fusion or thermal stresses. When both imaging and thermal data are available, the system integrates these analyses, cross-referencing geometric data with thermal data to detect more complex deviations that may not be apparent from a single type of data. For example, a geometric deviation might be correlated with an abnormal cooling pattern, providing deeper insights into potential defects and their root cause.

The comparison process is closely linked with the sampling method used during production. If monitoring is done layer by layer, the system compares each new layer with the corresponding layer from the historical data. When data is sampled at preset intervals, the system aligns these intervals with similar points in the historical records. For continuous video monitoring, the system can perform a more dynamic comparison, continuously aligning and analyzing the data in real-time. Any differences detected between the current sensor data and the historical data are identified as deviations.

In cases the deviation exceeds a certain threshold, indicating a major problem or a deviation that cannot be corrected by adjusting the production parameters, the system may initiate an optional step S207 for stopping the production process. Critical deviations that could trigger this include significant misalignments that would compromise the structure of the workpiece or severe thermal anomalies suggesting that the material has not fused properly, leading to potential structural weaknesses. Stopping production in these cases prevents unnecessary waste of materials and time on a workpiece that would ultimately be unusable, allowing for a reassessment of the process before restarting.

In an eighth step S208, after detecting deviations in the manufacturing process, a step of adaptive adjustments of one or more production parameters used can be performed to correct these deviations for the remaining part of the production of the workpiece. These adjustments may be initiated automatically by the system by means of identifying root cause in the previous step 206 or manually inputted by a user. Whether the deviations involve geometric inaccuracies, thermal inconsistencies, or other discrepancies, the system or user may fine-tune one or more parameters accordingly.

Such adjustments might include modifying the laser power to ensure consistent material fusion, adjusting the beam offset to correct alignment, or altering the hatch distance to improve material deposition and layer bonding. In the case of thermal anomalies, the system or user could adjust temperature settings or cooling rates to prevent issues such as material stress or warping. Additionally, the printing speed may be fine-tuned to control the deposition rate, which is particularly important when forming intricate features like fine cooling holes or small cavities.

After these adjustments are made, the system can continue monitoring the effects on subsequent identical calibration elements or layers in real-time in the case a plurality of identical calibration elements is foreseen as disclosed above. That is to say the above mentioned step of producing one or more calibration elements, monitoring their production, detecting deviation and performing adjustments to production parameters can be performed iteratively as long as there are deviation above a certain threshold, or as long as they are new identical calibration elements produced or as long as there is free space for accommodating an additional calibration element on the grape as disclosed above. Such an iterative adjustment process allows for ongoing refinement, ensuring that any deviations can corrected before the critical features of the workpiece are produced.

In an optional step S209, after the adaptive adjustments have been made, the one or more newly optimized production parameters can be registered in the machine's database for use in future production runs. This step allows for the refined settings to be readily accessible for similar builds, thereby reducing setup time and enhancing consistency across multiple production cycles. By storing these parameters, the system can automatically apply the successful adjustments in subsequent runs, ensuring that the benefits of the optimization are carried forward to improve future workpieces.

In an optional step S210, the system can store the capture current sensor data generated during the production of the workpiece for which the method has been used. This data can be tagged with specific identifiers to indicate the parameters applied and the results observed, such as whether deviations were detected or not, and any adjustments made in response. The tagged data is then added to the historical sensor data in its repository. By incorporating this information, the dataset available for future comparisons is enriched, enabling the system to continuously enhance its ability to detect and correct deviations in subsequent production processes. This process improves the system's predictive capabilities and ensures that the insights gained from each production run contribute to greater precision and quality in future workpieces.

Fig. 4 is a diagram of a system 400 according to the invention. The system 400 for additive manufacturing according to the present invention is designed to allow carrying out the steps of the method of Fig. 2 disclosed above with the aim of enhancing the precision and quality of the final workpiece through real-time monitoring and adaptive adjustments of production parameters. Each step of the method is executed by a specific module comprised in the system 400 as presented below in detailed. The skilled person understand that these modules can mix the necessary machanical equipements, computer hardware and software necessary for performing or allowing a user to perform the above-mentioned steps.

A module 401 is configured for initialize the additive manufacturing process. This module is configured to allow to sets up the additive production machine, to load the necessary materials (e.g., metal powder), and and to configure the initial production parameters, including layer thickness, printing speed, travel speed, temperature, laser power, beam offset, and hatch distance.

Next, a module 402 is configured to allow the handling the positioning of one or more calibration elements within the CAD model. The module can allows the user to select these calibration elements from a CAD software library based on the features in the workpiece that require testing. The calibration elements are then positioned in free spaces within the CAD model, ensuring they will be produced early in the manufacturing process before the corresponding critical features in the workpiece are formed.

A module 403 is configured to allow initiating the additive manufacturing of the CAD model, including the workpiece and the calibration elements. This module is also configured to start and perform the monitoring process, capturing current sensor data using various types of sensors as discussed above. The module allow to support flexible monitoring strategies, allowing for layer-by-layer sampling, preset time intervals, or continuous video recording.

A module 404 can be configured to allow performing early modifications to parameters thus allowing real-time adjustments during the production process.

A module 405 can be configured to allow detecting critical features in the produced calibration elements. This module may be configured to use techniques such as face recognition or overlaying heat maps with master templates to ensure the accuracy of the current sensor data, which will be used for further comparison and analysis.

A module 406 is configured to allow detecting deviations by comparing the current sensor data with historical sensor data stored in the system's repository. This module can be configured to align the current data with corresponding historical data, whether layer-by-layer, at preset intervals, or through continuous monitoring, to identify any discrepancies. If deviations are detected, they are flagged for further action by the module 406.

In cases where deviations exceed a certain threshold, a module 407 can be configured to stop the production process.

Following the detection of deviations, a module 408 is configured to perform adaptive adjustments to the production parameters in order to correct these issues. The adjustments can be made automatically by the system or the module can be configured to allow a manual input by the user A module 409 can be configured to allow registering the newly optimized production parameters in the system's database for use in future production runs. This module stores the refined settings, making them readily accessible for similar builds.

Finally, a module 410 can be configured to store the current sensor data captured during the production of the workpiece as disclosed in the method.

To summarize, this invention provides a system and method for enhancing the quality and precision of additive manufacturing through real-time / in-process observation, detection of deviation and adaptive parameter adjustment if and as long it is needed. By leveraging some unique features of additive manufacturing, such as the availability of free space around the workpiece for producing further elements and layer-by-layer construction allowing the possibility to add calibration elements for testing/observing performance of the production under certain parameters before the critical part of the workpiece is produced, the system can realize calibration elements early in the process to detect and correct deviations before they impact the final product.

## Claims

1. A method for additive manufacturing with in-process quality assurance and production parameters adjustment comprising:
positioning (S202) one or more calibration elements (301, 302, 303) within a CAD model in one or more free spaces not occupied by a workpiece to be produced by an additive manufacturing process using an additive manufacturing machine on the basis of the CAD model, wherein the one or more calibration elements comprise one or more features replicating features to be comprised in the workpiece once produced;
starting (S203) the additive manufacturing process to produce workpiece and the one or more calibration elements on the basis of the CAD model including the workpiece and the calibration elements, and initiating a monitoring process of the additive manufacturing process using an imaging sensor or a thermal sensor, or a combination of both, to capture current sensor data comprising image and/or thermal data of the one or more calibration elements (301, 302, 303) being produced;
detecting (S206) one or more deviations by comparing the current sensor data with historical sensor data stored;
adjusting (S208) one or more production parameters of the additive manufacturing machine performing the additive manufacturing process based on the detected one or more deviations.

2. The method of claim 1, wherein the one or more calibration elements (301, 302, 303) are positioned such that the one or more features comprised in the one or more calibration elements are each lower than each of the one or more features in the workpiece to be produced that they replicate.

3. The method of claim 2, wherein the one or more calibration elements (301, 302, 303) are positioned such that there is a preset vertical distance between the one or more features in the calibration elements and the corresponding one or more features in the workpiece to produce.

4. The method of any of the preceding claims, wherein the calibration elements to be positioned are selected in a CAD library based on a selected set of features of the workpiece requiring testing or observation.

5. The method of any of the preceding claims, wherein the monitoring process comprises flexible sampling options, such as layer-by-layer monitoring, preset time intervals, or continuous video recording, with the captured data being saved and tagged to the corresponding production sample and production parameters.

6. The method of any of the preceding claims, further comprising, after starting (S203) the additive manufacturing process, modifying (S204) production parameters during the manufacturing process based on results observed from the calibration elements.

7. The method of any of the preceding claims, wherein there is a plurality of identical calibration elements positioned in the one or more free spaces such as to be produced sequentially in time one after the other.

8. The method of claim 7, wherein the additive manufacturing, monitoring and deviation detection are performed iteratively for each identical calibration element of the plurality of identical calibrations elements until all the identical calibration elements are produced or until the production of the corresponding features in the workpiece begins or until the one or more deviations detected are below a preset threshold.

9. The method of any of the preceding claims, wherein the historical sensor data used for comparison comprises previously recorded current sensor datasets from earlier production runs from both successful builds.

10. The method of any of the preceding claims, wherein the comparison of current sensor data with historical sensor data comprises aligning the current sensor data with corresponding one or more layers or time intervals from the historical sensor data to detect deviations.

11. The method of any of the preceding claims, further comprising stopping (S207) the additive manufacturing process if the detected one or more deviations exceed a predetermined threshold.

12. The method of any one of the preceding claims, further comprising registering (S209) the adjusted one or more production parameters in a database for use in future production runs.

13. The method of claim 12, wherein the additive manufacturing machine applies automatically the stored adjusted one or more production parameters in subsequent production runs.

14. The method of any of the preceding claims, further comprising storing (S210) the current sensor data captured during the production of the workpiece and the one or more calibration elements, tagging it with identifiers indicating the applied parameters and results, and integrating it into the historical sensor data in a repository.

15. A system (400) for additive manufacturing with real-time quality assurance and production parameters adjustment, comprising:
a module (402) configured to position one or more calibration elements (301, 302, 304) within a CAD model in one or more free spaces not occupied by a workpiece to be produced by an additive manufacturing process using an additive manufacturing machine, wherein the one or more calibration elements comprise one or more features replicating features to be comprised in the workpiece once produced;
a module (403) configured to start the additive manufacturing process to produce the workpiece and the one or more calibration elements based on the CAD model, including the workpiece and the calibration elements, and to initiate a monitoring process of the additive manufacturing process using an imaging sensor, a thermal sensor, or a combination of both, to capture current sensor data comprising image and/or thermal data of the one or more calibration elements (301, 302, 304) being produced;
a module (406) configured to detect one or more deviations by comparing the current sensor data with historical sensor data stored in a repository;
a module (408) configured to adjust one or more production parameters of the additive manufacturing machine based on the detected one or more deviations.
